# EUROPÄISCHE PATENTSCHRIFT

(11) **EP 3 321 658 B1**
(45) Veröffentlichungstag und Bekanntmachung des Hinweises auf die Patenterteilung: **26.09.2018**
(21) Anmeldenummer: 16197964.6
(22) Anmeldetag: 09.11.2016
(51) Int. Cl.: G01N 21/27, G01N 21/31

(54) **ZWEIKANALIGES MESSGERÄT**
TWO-CHANNEL MEASURING DEVICE
APPAREIL DE MESURE À DEUX CANAUX

(43) Veröffentlichungstag der Anmeldung: 16.05.2018
(73) Patentinhaber: SICK AG, 79183 Waldkirch (DE)
(72) Erfinder: Disch, Rolf, 79356 Eichstetten (DE)

(56) Entgegenhaltungen:
- EP-A2- 0 243 139
- DE-B3-102009 025 147
- US-A- 3 904 880
- US-A1- 2005 243 320

## Beschreibung

Die Erfindung betrifft ein zweikanaliges Messgerät zur Bestimmung von Gaskonzentrationen nach dem Oberbegriff des Anspruchs 1.

Ein solches Messgerät ist aus der EP 2 811 286 A1 bekannt.

Von anderen Gaskonzentrationsmessgeräten ist es bekannt, zur Überprüfung und Kalibrierung interne Kontrollen hinsichtlich Genauigkeit, Stabilität, Empfindlichkeit vorzunehmen. Hierzu werden spektral empfindliche Komponenten, wie spektral selektierende (Interferenz)Filter, Gitterfilter, Graugläser und/oder mit Prüfgas befüllte Küvetten, deren Absorption bekannt ist, in den Strahlengang über motorbetriebene, sogenannte Filterräder bzw. Küvettenräder in den Strahlengang eingeschwenkt. Mit diesen wird dann entsprechend der Mess-/Kontrollanforderung das gewünschte optische Filterelement in den Strahlengang eingefahren/geschwenkt. Dies geschieht nacheinander.

Ist diese Kontrollfiltereinheit (Filterrad) in einem mehrkanaligen Messgerät, in dem zwei Spektralbereiche (z.B. UV und IR) vereinigt werden, wie z.B. in der genannten EP 2 811 286 A1 beschrieben, an einer Stelle eingebaut, wo beide spektralen Kanäle auf demselben optischen Pfad zusammengeführt sind, wäre in Zeiten, in denen der UV-Pfad mit einer UV-Komponente dieses Kontrollfilterrades überprüft wird, der IR-Pfad nicht aktiv und umgekehrt. Zur Kontrolle beider Kanäle wird somit mehr Zeit benötigt und somit ist die Verfügbarkeit eingeschränkt.

Dies könnte vermieden werden, wenn die Kontrollfiltereinheit an einem Ort eingebaut wird, wo die beiden Spektralkanäle noch getrennt sind. Dann wären allerdings zwei Kontrollfilterräder mit Motoren und Ansteuerung notwendig, was dann erhöhte Herstellkosten, mehr Bauraum und erhöhte Fehleranfälligkeit bedeuten würde.

Ähnliche Messgeräte, die Filterräder einsetzen sind, sind aus DE 10 2009 025 147 B3, EP 0 243 139 A2, und US 3 904 880 A bekannt.

Ausgehend von diesem Stand der Technik ist es Aufgabe der Erfindung, ein verbessertes zweikanaliges Messgerät bereitzustellen, das möglichst einfach aufgebaut ist und trotzdem eine Gleichzeitigkeit der Überprüfungsmessung ermöglicht.

Diese Aufgabe wird mit einem Messgerät mit den Merkmalen des Anspruchs 1 gelöst, nämlich mit
- einem zweikanaligen Messgerät zur Bestimmung von Gaskonzentrationen
- mit einer ersten und einer zweiten Lichtquelle, die Licht unterschiedlicher Wellenlängenbereiche aussenden,
- deren Lichtstrahlen auf eine optischen Einheit gerichtet sind, in der die Lichtstrahlen auf den gleichen optischen Pfad und in eine Messstrecke geführt sind,
- mit einer Empfangsanordnung, die das Licht der Lichtquellen nach Durchlaufen der Messstrecke empfängt,
- mit einer Auswerteeinheit zur Auswertung der Empfangssignale und Bestimmung einer Gaskonzentration daraus,
- wobei eine Filterradanordnung vorgesehen ist, mit der Filter in die beiden Strahlengänge der Lichtquellen zur Kalibrierung bzw. Funktionskontrolle eingeschwenkt werden können und
- wobei die Filterradanordnung im Strahlengang zwischen den beiden Lichtquellen und der optischen Einheit angeordnet ist und
- wobei die Filterradanordnung wenigstens zwei Paare von Öffnungen mit jeweils erster und zweiter Öffnung aufweist und
- wobei die Paare von Öffnungen so angeordnet sind, dass bei Drehung der Filterradanordnung um eine Drehachse jeweils ein Paar in die beiden Strahlengänge einschwenkbar ist, so dass einer der beiden Strahlengänge jeweils die erste Öffnung durchsetzt und der andere Strahlengang gleichzeitig die zugehörige zweite Öffnung durchsetzt und
- wobei in den Öffnungen die Filter angeordnet sind, wobei bei wenigstens einem Paar die Öffnungen frei bleiben und keinen Filter aufweisen.

Der wesentliche Vorteil ist, dass ein zweikanaliges Messgerät bereitgestellt ist, bei dem einerseits die beiden optischen Kanäle auf gleichem optischen Pfad liegen, die optischen Kanäle getrennt kontrollierbar sind, aber gleichzeitig die Kontrolleinrichtung, also das Filterrad bzw. Küvettenrad, mit den optischen Kalibrierelementen nur einmal vorhanden sein muss, ohne dass die Verfügbarkeit eingeschränkt ist.

Eine konstruktiv einfache und gut zu handhabende Ausführung der Filteranordnung ist gegeben, wenn diese kegelstumpfförmig ausgebildet ist, wobei die Öffnungen in der Mantelfläche des Kegels vorgesehen sind. Das hat den weiteren Vorteil, dass die Filter in den Öffnungen nahezu senkrecht vom Licht durchsetzt sein können und damit insgesamt wenig Bauraum beansprucht wird.

Die Drehachse der Filteranordnung, insbesondere in der kegelstumpfförmigen Ausbildung, liegt vorteilhafterweise auf einer Winkelhalbierenden eines Winkels, den die beiden Lichtstrahlen der beiden Lichtquellen einschließen.

Ein einfacher zu justierender und leicht zu realisierender Aufbau für das Messgerät ergibt sich, wenn die optischen Achsen der Lichtquellen senkrecht zueinander stehen.

Vorteilhafterweise sind die Öffnungen eines Paares diametral gegenüberliegend angeordnet. Eine derart symmetrische Anordnung ist konstruktiv vorteilhaft.

Den gleichen Vorteil hat auch eine Ausführung, bei der die Öffnungen auf gleichem Teilkreis liegen.

In Weiterbildung der Erfindung ist hinter der Messstrecke ein Retroreflektor angeordnet und die optische Einheit auch zur Trennung des Empfangslichts ausgebildet. So wird die Messstrecke von dem Licht zweimal durchlaufen und die gesamte Elektronik mit Sender, Empfänger und Auswertung kann kompakt auf einer Seite der Messstrecke liegen.

Vorteilhafterweise wird das erfindungsgemäße Messgerät eingesetzt, wenn eine der Lichtquellen UV-Licht abgibt und die andere IR-Licht, also die beiden Wellenlängen sehr weit voneinander entfernt sind. Der einer Lichtquelle jeweils zugeordnete Empfänger ist dementsprechend dazu ausgebildet, das UV-Licht bzw. IR-Licht zu empfangen.

Im Folgenden wird die Erfindung anhand von Ausführungsbeispielen unter Bezugnahme auf die Zeichnung im Einzelnen erläutert. In der Zeichnung zeigen:
- Fig. 1: eine schematische Darstellung einer Ausführungsform des erfindungsgemäßen Messgeräts;
- Fig. 2: eine Draufsicht auf eine Ausführungsform der Filteranordnung.

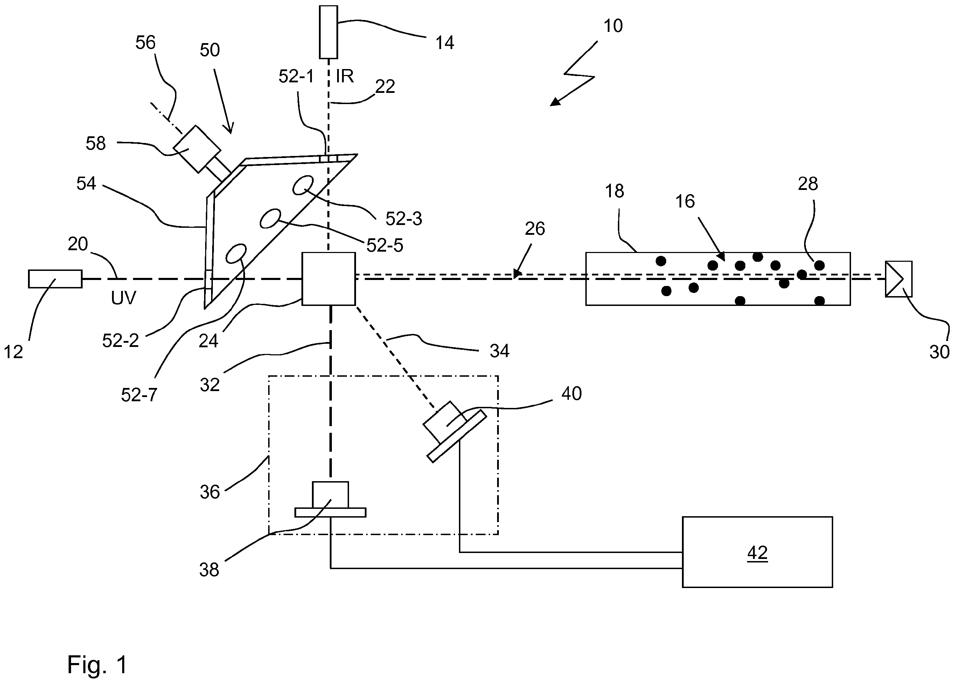

Das erfindungsgemäße Messgerät 10 zur Bestimmung von Gaskonzentrationen umfasst eine erste Lichtquelle 12 und eine zweite Lichtquelle 14, die Licht unterschiedlicher Wellenlängenbereiche in eine Messstrecke 16 senden. Die Messstrecke 16 liegt in diesem Ausführungsbeispiel in einer Messküvette 18. Beispielsweise sendet die erste Lichtquelle 12 UV-Licht aus, das in der Fig. 1 durch stärker (länger) gestrichelte Linien als Lichtstrahlen 20 dargestellt ist und die zweite Lichtquelle 14 sendet IR-Licht aus, das in der Fig. 1 durch fein (kürzer) gestrichelte Linien als Lichtstrahlen 22 dargestellt ist. Das Messgerät 10 hat damit zwei spektrale Kanäle.

Die Lichtstrahlen 20 und 22 der beiden Lichtquellen 12 und 14 sind auf eine optische Einheit 24 gerichtet, in der die Lichtstrahlen 20 und 22 auf den gleichen optischen Pfad 26 und in die Messstrecke 16 geführt sind. Vorzugsweise stehen die optischen Achsen der Lichtquelle 12 und die der Lichtquelle 14 senkrecht zueinander. Die optische Einheit 24 kann zur Strahlvereinigung in bekannter Weise entsprechende Spiegelelemente oder dergleichen aufweisen.

Auf der Messtrecke 16 erfolgt die eigentliche Reaktion des Lichts 12 und 14 mit im Bereich der Messstrecke 16 vorgesehenem Messgas (das Messgas ist in Fig. 1 durch Punkte 28 dargestellt), von dem Konzentrationen bestimmter Komponenten bestimmt werden sollen. Das Messgas kann sich dabei in der dargestellten Messküvette 18 oder dergleichen befinden - oder auch in einer freien Strecke eines Abgaskanals.

Von den Lichtquellen 12 und 14 aus gesehen befindet sich hinter der Messstrecke 16 ein Retroreflektor 30, der das UV- und das IR-Licht in sich reflektiert, so dass es noch mal die Messstrecke 16 auf demselben optischen Weg 26 durchläuft. Sendelicht- und Empfangslichtpfad sind damit zumindest innerhalb der Messstrecke 16 koaxial ausgebildet, was für beide Wellenlängenbereiche gilt.

Das reflektierte Licht gelangt dann wieder zur optischen Einheit 24 zurück. In der optischen Einheit 24 erfolgt eine Trennung des UV- und des IR-Lichtes auf dann getrennte optische Wege 32 und 34 in Richtung einer Empfangsanordnung 36. Die Empfangsanordnung 36 empfängt das Licht der Lichtquellen also nach Durchlaufen der Messstrecke, wobei in einem UV-Empfänger 38 das UV-Licht 32 und in einem IR-Empfänger 40 das IR-Licht 34 nachgewiesen wird.

Die Empfänger 38 und 40 erzeugen in Abhängigkeit des Lichteinfalls Empfangssignale, die zu einer Auswerteeinheit 42 geführt sind und dort zur Bestimmung der Gaskonzentration ausgewertet werden.

Zur Funktionskontrolle und/oder Kalibrierung und/oder Kontrolle von Genauigkeit, Stabilität, Empfindlichkeit und dergleichen mehr ist eine Filterradanordnung 50 vorgesehen, mit der verschiedene Filter G1, G2, I1, I1, K1 und K2 in die Strahlengänge 20 und 22 eingeschwenkt werden können. Unter dem Begriff "Filter" sollen in diesem Zusammenhang die verschiedensten optischen Komponenten verstanden werden, die für die genannten Kontrollen verwendet werden können. Dies können Farbfilter, Interferenzfilter, Gitterfilter, Graugläser, mit Prüfgas befüllte Referenzküvetten und/oder dergleichen sein. Da die Absorption solcher Filter bekannt ist, kann die gewünschte Kontrolle erfolgen.

Kern der Erfindung ist die Anordnung, Ausführung und Funktionsweise der Filterradanordnung, mit der Filter in die beiden Strahlengänge der Lichtquellen zur Kalibrierung bzw. Funktionskontrolle eingeschwenkt werden können.

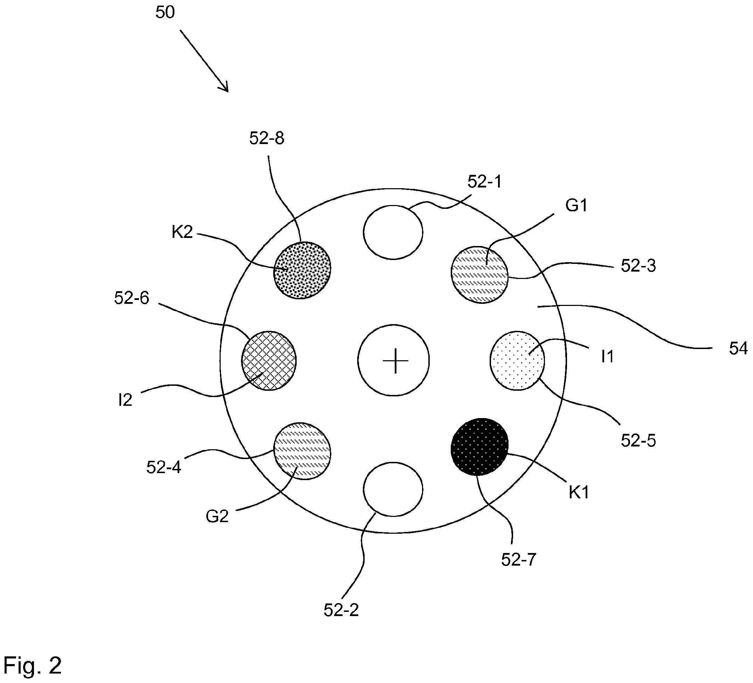

Die Filterradanordnung 50 ist in den Strahlengängen 20 und 22 zwischen den beiden Lichtquellen 12 und 14 und der optischen Einheit 24 angeordnet. In dem dargestellten Ausführungsbeispiel weist die Filterradanordnung 50, die in Fig. 1 in einer schematischen Schnittdarstellung und in Fig. 2 in einer Draufsicht dargestellt ist, eine kegelstumpfförmigen Mantelfläche 54 auf. Die Mantelfläche 54 ist durch Paare mit jeweils erster und zweiter Öffnung durchbrochen. Die Öffnungen liegen vorzugsweise auf gleichem Teilkreis. In dem Ausführungsbeispiel sind dies vier Paare, bestehend jeweils aus ersten und zweiten Öffnungen 52-1 und 52-2, 52-3 und 52-4, 52-5 und 52-6 und 52-7 und 52-8. Die ersten und zweiten Öffnungen sind jeweils diametral gegenüberliegend angeordnet.

Die Mantelfläche 54 ist drehbar um eine Drehachse 56 gelagert und wird von einem Antrieb 58 angetrieben. Auf diese Weise können immer gegenüberliegende Öffnungen gleichzeitig in die beiden Strahlengänge 20 und 22 eingeschwenkt werden, so dass einer der beiden Strahlengänge jeweils die erste Öffnung durchsetzt und der andere Strahlengang gleichzeitig die zugehörige zweite Öffnung durchsetzt. Dabei liegt die Drehachse 56 in der Ansicht der Fig. 1 in etwa auf einer Winkelhalbierenden eines Winkels, den die beiden Lichtstrahlen 20 und 22 der beiden Lichtquellen 12 und 14 einschließen.

Für den normalen Arbeitsbetrieb, in dem die Konzentrationsmessungen erfolgen, sind die Öffnungen 52-1 und 52-2 in die Strahlengänge geschwenkt. Diese Öffnungen sind frei, so dass das UV-Licht und das IR-Licht ungehindert hindurchtreten kann.

Die weiteren Öffnungen 52-3 bis 52-8 weisen die Filter für die oben beschriebene Kontrolle auf. Dies können bekannte Filter sein, wie sie auch in bekannten Filterrädern eingesetzt werden. Dies können beispielsweise sein:
- Graugläser G1 und G2, die das Licht einfach nur schwächen,
- Interferenzfilter I1 und I2, die nur eine spezielle Wellenlänge durchlassen
- oder mit Prüfgas befüllte Referenzküvetten K1 und K2, die ganz spezifische Absorptionen haben.

In nicht dargestellten Ausführungsformen der Erfindung kann die Filterradanordnung auch anders ausgebildet sein. Es wäre z.B. denkbar, dass das Filterrad eine andere als kegelstumpfförmige Gestalt hat. Auch können die Winkel, insbesondere die Winkel der Filter gegenüber den Lichtstrahlen, anders als in den Figuren dargestellt sein. Dadurch können möglicherweise andere Bauraumformen des gesamten Messgerätes 10 verwirklicht werden. Das erfinderische Konzept, dass nur ein Filterrad auf zwei unterschiedlichen optischen Pfaden gleichzeitig genutzt wird, wird dabei nicht verlassen.

## Patentansprüche

1. Messgerät mit zwei spektralen Kanälen zur Bestimmung von Gaskonzentrationen
- mit einer ersten und einer zweiten Lichtquelle (12 und 14), die Licht unterschiedlicher Wellenlängenbereiche aussenden (20 und 22),
- deren Lichtstrahlen (20 und 22) auf eine optischen Einheit (24) des Messgeräts (10) gerichtet sind, in der die Lichtstrahlen (20 und 22) auf den selben optischen Pfad (26) und in eine Messstrecke (16) geführt sind,
- mit einer Empfangsanordnung (36), die das Licht der beiden Lichtquellen (12 und 14) nach Durchlaufen der Messstrecke (16) empfängt, wobei das Licht der beiden Lichtquellen nach Durchlaufen der Messstrecke getrennt in Empfängern (38 und 40) nachgewiesen wird, die in Abhängigkeit des Lichteinfalls Empfangssignale erzeugen,
- mit einer Auswerteeinheit (42) zur Auswertung der Empfangssignale und Bestimmung einer Gaskonzentration daraus,
- wobei eine Filterradanordnung (50) vorgesehen ist, die wenigstens zwei Filter (G1, G2, I1, I2, K1, K2) aufweist und mit der die Filter in die beiden Strahlengänge (20, 22) der Lichtquellen (12, 14) zur Kalibrierung bzw. Funktionskontrolle eingeschwenkt werden können und
- wobei die Filterradanordnung (50) im Strahlengang (20, 22) zwischen den beiden Lichtquellen (12, 14) und der optischen Einheit (24) angeordnet ist und
- wobei die Filterradanordnung (50) wenigstens zwei Paare von Öffnungen (52-1, 52-2; 52-3, 52-4; 52-5, 52-6; 52-7, 52-8) mit jeweils erster (52-1, 52-3, 52-5, 52-7) und zweiter (52-2, 52-4, 52-6, 52-8) Öffnung aufweist und
- die Paare von Öffnungen (52-1, 52-2; 52-3, 52-4; 52-5, 52-6; 52-7, 52-8) so angeordnet sind, dass bei Drehung der Filterradanordnung (50) um eine Drehachse (56) jeweils eines der Paare in die beiden Strahlengänge (20, 22) einschwenkbar ist, so dass einer der beiden Strahlengänge (20 bzw. 22) jeweils die erste Öffnung (52-1, 52-3, 52-5, 52-7) durchsetzt und der andere Strahlengang (22 bzw. 20) gleichzeitig die zugehörige zweite Öffnung (52-2, 52-4, 52-6, 52-8) durchsetzt und
- wobei in den Öffnungen (52-3, 52-4; 52-5, 52-6; 52-7, 52-8) die Filter (G1, G2, I1, I2, K1, K2) angeordnet sind, wobei bei wenigstens einem Paar die Öffnungen (52-1 und 52-2) frei bleiben und keinen Filter aufweisen.

2. Messgerät nach Anspruch 1, **dadurch gekennzeichnet, dass** die Filterradanordnung kegelstumpfförmig ausgebildet ist.

3. Messgerät nach einem der vorhergehenden Ansprüche, **dadurch gekennzeichnet, dass** die Drehachse auf einer Winkelhalbierenden eines Winkels, den die beiden Lichtstrahlen der beiden Lichtquellen einschließen, liegt.

4. Messgerät nach einem der vorhergehenden Ansprüche, **dadurch gekennzeichnet, dass** die optischen Achsen der Lichtquellen senkrecht zueinander stehen.

5. Messgerät nach einem der vorhergehenden Ansprüche, **dadurch gekennzeichnet, dass** die Öffnungen eines Paares diametral gegenüberliegend angeordnet sind.

6. Messgerät nach einem der vorhergehenden Ansprüche, **dadurch gekennzeichnet, dass** die Öffnungen auf gleichem Teilkreis liegen.

7. Messgerät nach einem der vorhergehenden Ansprüche, **dadurch gekennzeichnet, dass** hinter der Messstrecke ein Retroreflektor angeordnet ist und die optische Einheit auch zur Trennung des Empfangslichts ausgebildet ist.

8. Messgerät nach einem der vorhergehenden Ansprüche, **dadurch gekennzeichnet, dass** eine der Lichtquellen UV-Licht abgibt und die andere IR-Licht und dass der jeweils zugeordnete Empfänger dazu ausgebildet ist, das UV-Licht bzw. IR-Licht zu empfangen.

## Claims

1. Measuring device with two spectral channels for the determination of gas concentrations
- a first and a second light source (12 and 14) emitting light of different wavelength ranges (20 and 22),
- the light beams (20 and 22) of which are directed onto an optical unit (24) of the measuring device (10), in which the light beams (20 and 22) are guided onto the same optical path (26) and into a measuring path (16),
- with a receiving arrangement (36) which receives the light of the two light sources (12 and 14) after passing through the measuring section (16), wherein the light of the two light sources is detected separately after passing through the measuring section in receivers (38 and 40) which generate receiving signals depending on the incidence of light,
- with an evaluation unit (42) for evaluating the received signals and determining a gas concentration therefrom,
- wherein a filter wheel arrangement (50) is provided which has at least two filters (G1, G2, 11, 12, K1, K2) and with which the filters can be pivoted into the two beam paths (20, 22) of the light sources (12, 14) for calibration or function control, and
- the filter wheel arrangement (50) being arranged in the beam path (20, 22) between the two light sources (12, 14) and the optical unit (24), and
- said filter wheel assembly (50) having at least two pairs of openings (52-1, 52-2; 52-3, 52-4; 52-5, 52-6; 52-7, 52-8) each having first (52-1, 52-3, 52-5, 52-7) and second (52-2, 52-4, 52-6, 52-8) openings, and
- the pairs of openings (52-1, 52-2; 52-3, 52-4; 52-5, 52-6; 52-7, 52-8) are arranged such that when the filter wheel arrangement (50) is rotated about an axis of rotation (56) one of the pairs can be pivoted into the two beam paths (20, 22), so that one of the two beam paths (20, 22) passes through the first opening (52-1, 52-3, 52-5, 52-7) and the other beam path (22 or 20) passes through the associated second opening (52-2, 52-4, 52-6, 52-8) simultaneously and
- wherein the filters (G1, G2, 11, 12, K1, K2) are arranged in the openings (52-3, 52-4; 52-5, 52-6; 52-7, 52-8), wherein in at least for one pair the openings (52-1 and 52-2) remain free and have no filter.

2. Measuring device according to claim 1, **characterized in that** the filter wheel arrangement is of frustoconical design.

3. Measuring device according to one of the preceding claims, **characterized in that** the axis of rotation lies on an angular bisector of an angle enclosed by the two light beams of the two light sources.

4. Measuring device according to one of the preceding claims, **characterized in that** the optical axes of the light sources are perpendicular to one another.

5. Measuring device according to one of the preceding claims, **characterized in that** the openings of a pair are arranged diametrically opposite one another.

6. Measuring instrument according to one of the preceding claims, **characterized in that** the openings are on the same pitch circle.

7. Measuring device according to one of the preceding claims, **characterized in that** a retroreflector is arranged behind the measuring path and the optical unit is also designed to separate the receiving light.

8. Measuring device according to one of the preceding claims, **characterized in that** one of the light sources emits UV light and the other IR light and **in that** the respective associated receiver is designed to receive the UV light or IR light, repsectively.

## Revendications

1. Dispositif de mesure à deux canaux spectraux pour la détermination des concentrations de gaz
- avec une première et une seconde source de lumière (12 et 14) émettant de la lumière de différentes longueurs d'onde (20 et 22),
- dont les faisceaux lumineux (20 et 22) sont dirigés sur une unité optique (24) du dispositif de mesure (10), dans laquelle les faisceaux lumineux (20 et 22) sont guidés sur le même trajet optique (26) et dans un trajet de mesure (16),
- avec un dispositif de réception (36) qui reçoit la lumière des deux sources de lumière (12 et 14) après avoir traversé la section de mesure (16), dans lequel la lumière des deux sources de lumière est détectée séparément après avoir traversé la section de mesure dans des récepteurs (38 et 40) qui génèrent des signaux de réception en fonction de l'incidence de la lumière,
- avec une unité d'évaluation (42) pour évaluer les signaux reçus et déterminer une concentration de gaz à partir de ceux-ci,
- et un agencement de roue filtrante (50) est prévu qui présente au moins deux filtres (G1, G2, I1, I2, I2, K1, K2) et avec lequel les filtres peuvent pivoter dans les deux trajets de faisceau (20, 22) des sources lumineuses (12, 14) pour l'étalonnage ou la commande de fonction, et
- l'agencement de roue de filtre (50) étant disposé dans le trajet de faisceau (20, 22) entre les deux sources de lumière (12, 14) et l'unité optique (24), et
- l'ensemble de roue filtrante (50) ayant au moins deux paires d'ouvertures (52-1, 52-2 ; 52-3, 52-4 ; 52-5, 52-6 ; 52-7, 52-8) ayant chacune une première (52-1, 52-3, 52-5, 52-5, 52-7) et une seconde (52-2, 52-4, 52-6, 52-8) ouverture, et
- les paires d'ouvertures (52-1, 52-2 ; 52-3, 52-4 ; 52-5, 52-6 ; 52-7, 52-8) sont disposés de telle sorte que, lorsque l'agencement de roue de filtre (50) est tourné autour d'un axe de rotation (56), l'une des paires peut pivoter dans les deux trajets de faisceau (20, 22), de sorte que l'un des deux trajets de faisceau (20, 22) entremêle la première ouverture (52-1, 52-3, 52-3, 52-5, 52-7) et l'autre trajet de faisceau (22 ou 20) entremêle en même temps la deuxième ouverture associée (52-2, 52-4, 52-6, 52-8) et
- les filtres (G1, G2, I1, I2, I2, K1, K2) sont disposés dans les ouvertures (52-3, 52-4 ; 52-5, 52-6 ; 52-7, 52-8), et d'au moins pour une paire, les ouvertures (52-1 et 52-2) restent libres et n'ont pas de filtre.

2. Dispositif de mesure selon la revendication 1, **caractérisé en ce que** l'agencement de la roue filtrante est de conception tronconique.

3. Dispositif de mesure selon l'une des revendications précédentes, **caractérisé en ce que** l'axe de rotation repose sur une bissectrice angulaire d'un angle entouré par les deux faisceaux lumineux des deux sources lumineuses.

4. Dispositif de mesure selon l'une des revendications précédentes, **caractérisé en ce que** les axes optiques des sources lumineuses sont perpendiculaires entre eux.

5. Dispositif de mesure selon l'une des revendications précédentes, **caractérisé en ce que** les ouvertures d'une paire sont disposées diamétralement opposées l'une à l'autre.

6. Instrument de mesure selon l'une des revendications précédentes, **caractérisé en ce que** les ouvertures sont sur le même cercle de pas.

7. Dispositif de mesure selon l'une des revendications précédentes, **caractérisé en ce qu'**un rétroréflecteur est disposé derrière le trajet de mesure et l'unité optique est également conçue pour séparer la lumière de réception.

8. Dispositif de mesure selon l'une des revendications précédentes, **caractérisé en ce que** l'une des sources de lumière émet de la lumière UV et l'autre de la lumière IR et **en ce que** le récepteur associé respectif est conçu pour recevoir la lumière UV ou la lumière IR, respectivement.
